**Europäisches Patentamt**

**European Patent Office**

**Office européen des brevets**

(11) Publication number : **0 420 572 B1**

# (12) EUROPEAN PATENT SPECIFICATION

(45) Date of publication of patent specification :
25.01.95 Bulletin 95/04

(51) Int. Cl.⁶ : **G09G 3/36**

(21) Application number : **90310479.2**

(22) Date of filing : **25.09.90**

(54) **A method for driving an active matrix display.**

(30) Priority : **26.09.89 JP 250082/89**

(43) Date of publication of application :
**03.04.91 Bulletin 91/14**

(45) Publication of the grant of the patent :
**25.01.95 Bulletin 95/04**

(84) Designated Contracting States :
**DE FR GB**

(56) References cited :
EP-A- 0 248 471
EP-A- 0 320 054
EP-A- 0 321 962

(73) Proprietor : **SEIKO EPSON CORPORATION**
**4-1, Nishishinjuku 2-chome**
**Shinjuku-ku Tokyo (JP)**

(72) Inventor : **Sato, Takashi**
**c/o Seiko Epson Corporation,**
**3-5 Owa 3-chome**
**Suwa-shi, Nagano-ken (JP)**

(74) Representative : **Miller, Joseph et al**
**J. MILLER & CO.**
**34 Bedford Row,**
**Holborn**
**London WC1R 4JH (GB)**

## Description

The present invention relates to a method for driving an active matrix display.

In recent years, an active matrix display has been employed in which a voltage is applied to a material provided with an electro-optical effect, such as a liquid crystal material, by using remanence of a ferro-electric material forming an active layer (EP-A-0 246 945). For driving the active matrix display, it is necessary to carry out writing-in by inverting the remanence in a selective period and then to hold the remanence inverted in a holding period to avoid its further inversion.

However, conventionally the remanence has inverted again in the holding period, and so it has not been possible to avoid variation of the remanence value. As a result, cross talk has been generated, causing a degradation of display quality. Such degradation of the quality has been remarkable, especially in the case of a gradation display.

EP-A-0 321 962 discloses a matrix display device as shown in Figures 1-6 and a driving method similar to that set out in Figures 7 and 8. However, no precise condition for the amplitude value of the data voltage $V_1$ during the non-selective period is given. EP-A-0 320 054 discloses a driving method wherein a driving signal is sustained in the non-selective state.

The present invention aims to provide an improved method for driving an active matrix display, which enables an excellent display quality to be realised without cross talk.

This aim is achieved by the features set out in Claims 1 and 2.

According to the present invention, there is provided a method for driving an active matrix display having a first insulative substrate, a second insulative substrate, and a layer of a material provided with an electro-optical effect between the first and second insulative substrates, the first insulative substrate carrying pixel electrodes arranged in a matrix and a plurality of first parallel electrodes separated from the pixel electrodes by regions of an active layer formed of ferro-electric material, and the second insulative substrate carrying a plurality of second parallel electrodes arranged in a direction perpendicular to the first parallel electrodes, the method comprising the steps of applying a selective voltage sequentially to each of said second electrodes or said first electrodes during respective selective periods, applying a data voltage to each of said first electrodes or said second electrodes during respective non-selective periods, and characterised by controlling the data voltage, and thereby the voltage applied to each region of the active layer during the non-selective period, such that inversion of more than half of an spontaneous polarisation of the region generated in the selective period is avoided.

In one embodiment of the method described below, a selective voltage $V_0$ is applied serially to each of the first electrodes or the second electrodes, and a data voltage $V_1$ is applied to each of the second electrodes or the first electrodes, and the data voltage $V_1$ is set to have an absolute value such that

$$| V_1 | < E_C \cdot d_F (C_{LC} + C_F) / C_{LC}$$

wherein an coercive field of the ferro-electric material is defined as $E_C$, a layer thickness of the active layer is defined as $d_F$, a capacity of one pixel of the active layer is defined as $C_F$, and a capacity of one pixel of the material provided with the electro-optical effect is defined as $C_{LC}$.

In another embodiment of the invention described below, a selective voltage $V_0$ is applied to each of the first electrodes or the second electrodes sequentially, and a data voltage $V_1$ is applied to the second electrodes or the first electrodes, and the voltage $V_1$ is set such that a voltage $V_F$ applied to the active layer and having an absolute value $| V_F |$ expressed by

$$| V_1 | \cdot C_{LC} / (C_{LC} + C_F)$$

corresponds with a time period from the application of the voltage $V_F$ to the active layer until half of the spontaneous polarisation in the active layer is inverted, which is greater than the selective period (with a capacity of one pixel of the active layer being defined as $C_F$ and a capacity of one pixel of the material provided with the electro-optical effect being defined as $C_{LC}$.

During the selective period, the selective voltage $V_0$ is serially applied to the first or second electrodes and the data voltage $V_1$ is applied serially to the second or first electrodes, and the spontaneous polarisation in the active layer is inverted. Then, during the non-selective period, a voltage $V_{LC}$ is applied to the material provided with the electro-optical effect by the data voltage $V_1$, and a voltage

$$\frac{C_{LC}}{C_{LC} + C_F} \cdot V_1$$

is applied to the active layer. If this latter voltage were to cause a further inversion of the spontaneous polarisation in the active layer, its remanence would change causing the voltage $V_{LC}$ to be modulated. In the first embodiment of the present invention, however, this is avoided by decreasing the value of the voltage

$$\frac{C_{LC}}{C_{LC} + C_F} \cdot | V_1 |$$

to be smaller than $E_C.d_F$. As a result, the remanence generated in the active layer during the selective period is not varied, and the electric field applied to the material provided with the electro-optical effect is able to carry out alternate driving without causing cross talk.

In the second embodiment of the present invention, by setting the absolute value of the voltage $V_F$ to

be

$$| V_1 | \cdot \frac{C_{LC}}{C_{LC} + C_F}$$

to allow the time from when the voltage $V_F$ is applied to the active layer until half of the spontaneous polarisation is inverted to be at least greater than the selective period, the inversion of the spontaneous polarisation can again be avoided. In this case, the voltage $V_F$ can be larger than in the case of the first embodiment.

The present invention will be described further, by way of example, with reference to the accompanying drawings, in which:-

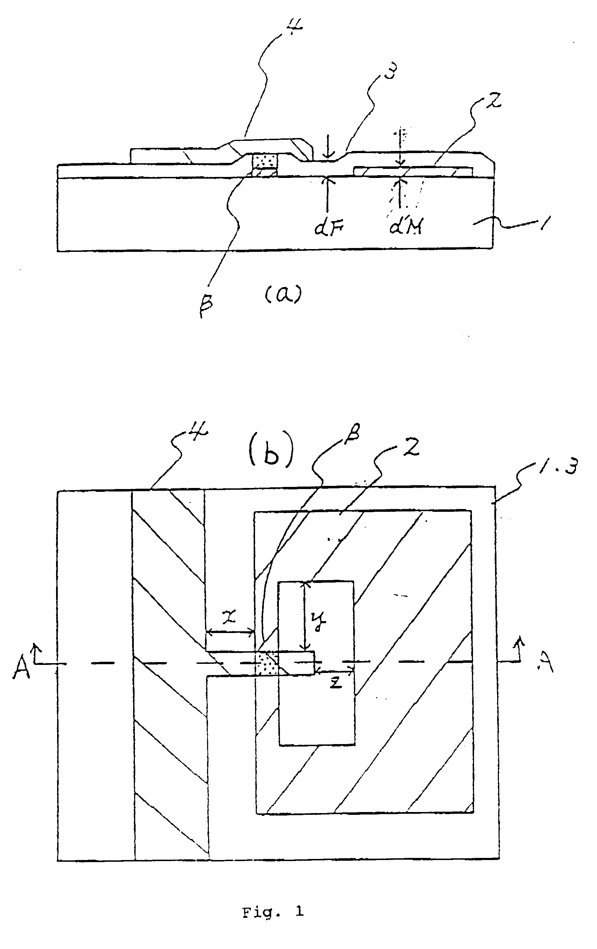

Figures 1 (a) and 1 (b) are cross sectional and plan views showing the structure of an active device suitable for application in the present invention;

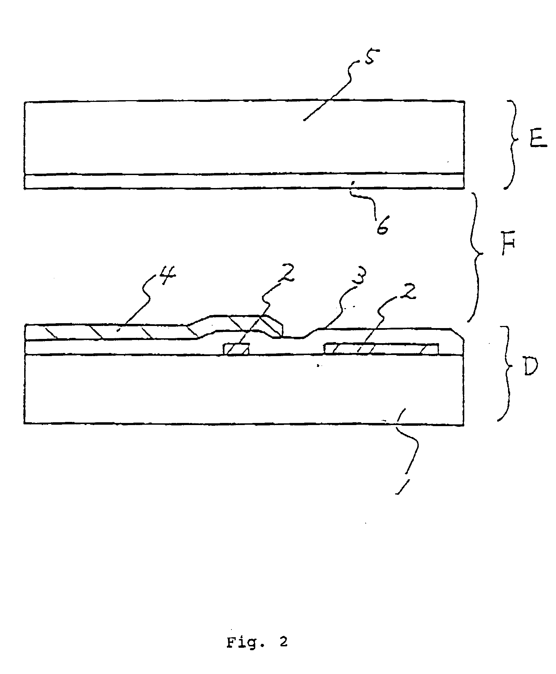

Figure 2 is a cross sectional view showing the structure of a liquid crystal cell using the active device of Figure 1;

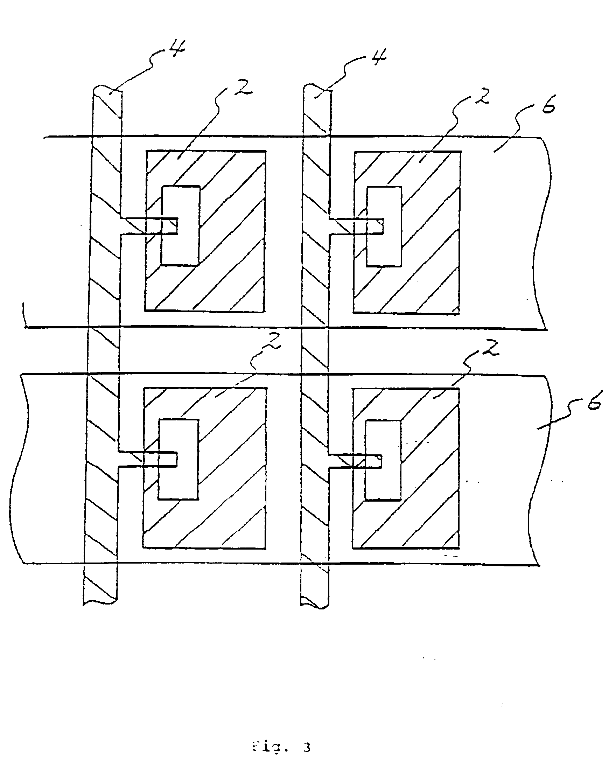

Figure 3 is a plan view showing an active matrix display comprising liquid crystal cells as shown in Figure 2;

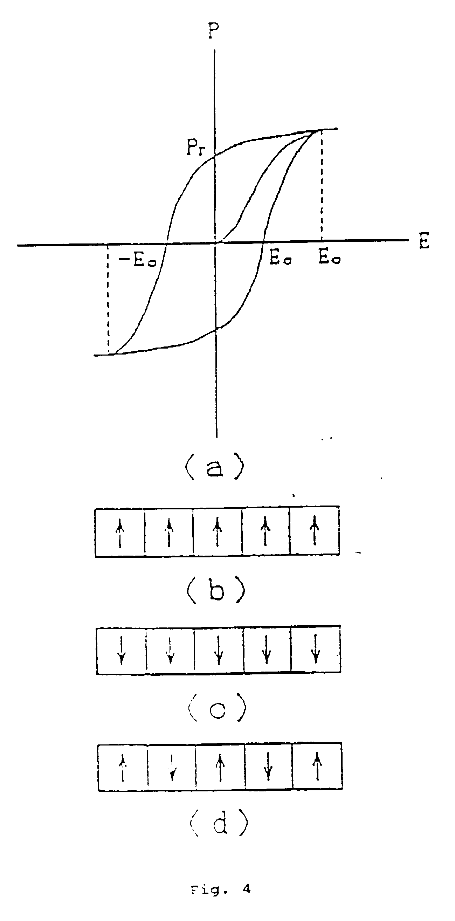

Figures 4 (a), 4 (b), 4 (c) and 4 (d) are views showing a hysteresis curve and spontaneous polarisation of a ferro-electric material employed in the active device of Figure 1;

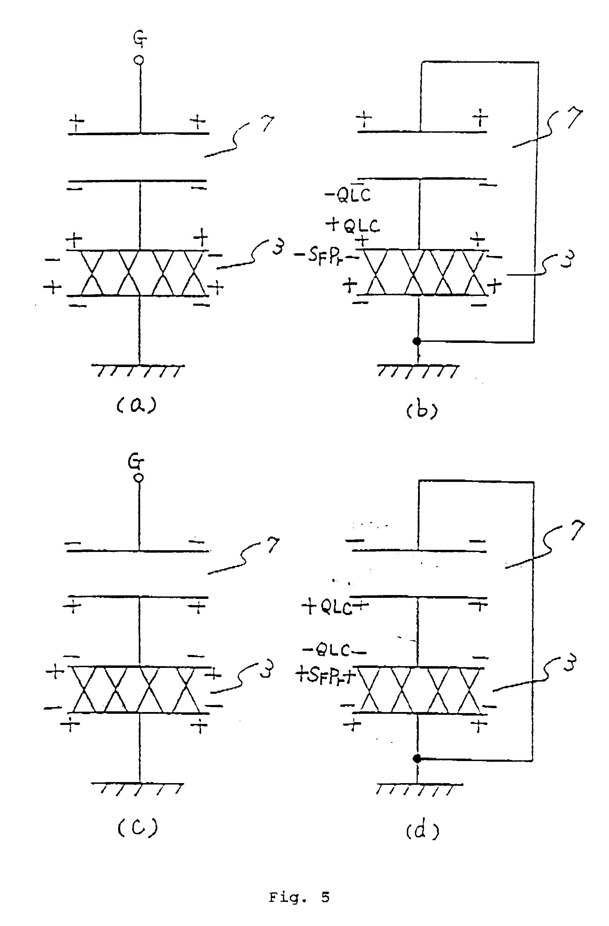

Figures 5 (a), 5 (b), 5 (c) and 5 (d) are equivalent circuit diagrams for one pixel of the active matrix display of Figure 3;

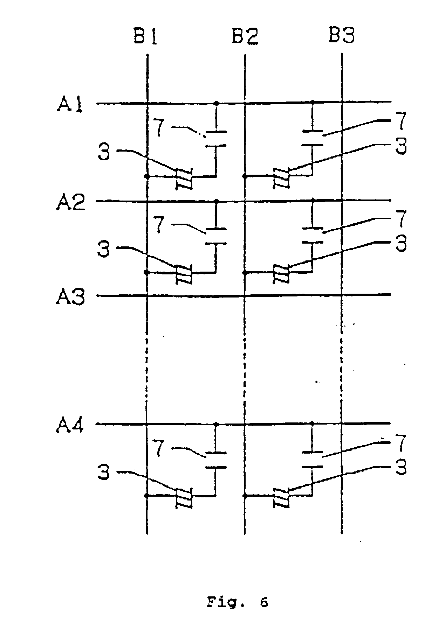

Figure 6 is an equivalent circuit diagram of the overall active matrix display of Figure 3;

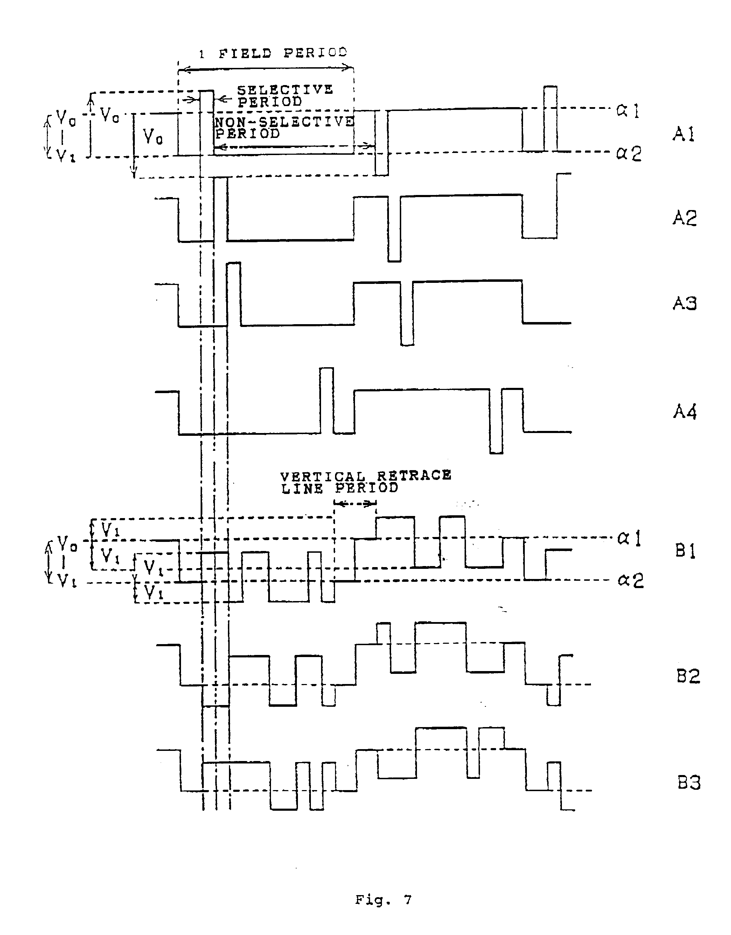

Figure 7 is a view showing driving signals for the active matrix display of Figure 3 in one example of the present invention;

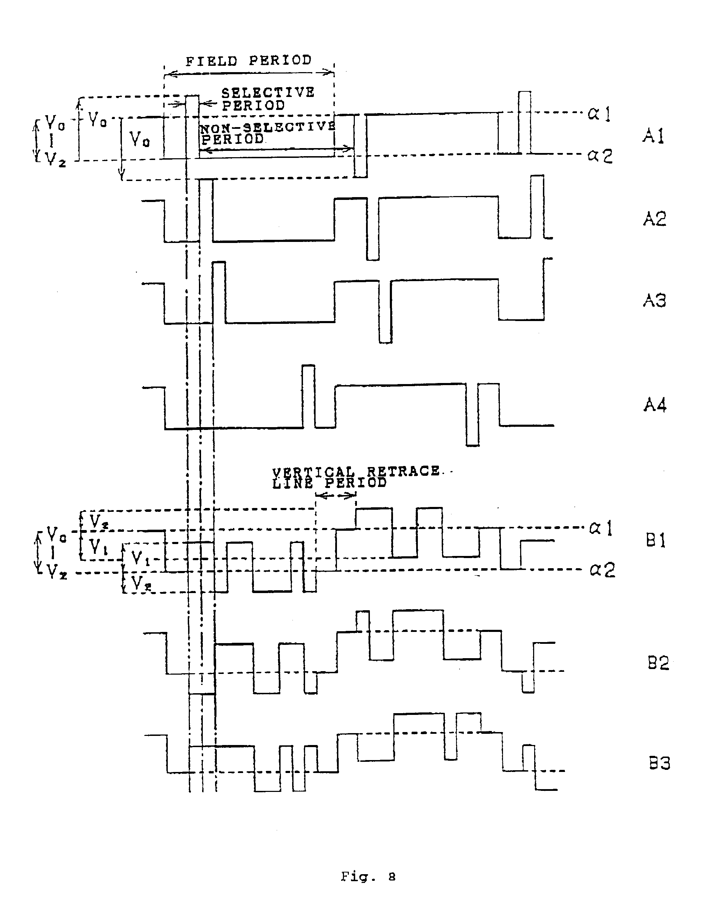

Figure 8 is a view showing driving signals for the active matrix display of Figure 3 in another example of the present invention;

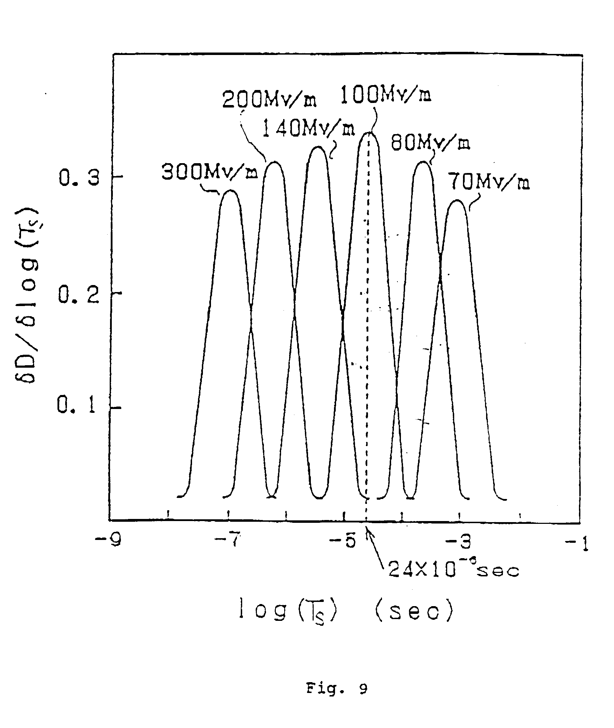

Figure 9 is a graph showing the relation between the time differential of electric displacement of the ferro-electric material and the inversion speed of the spontaneous polarisation, as printed in the Japanese Journal of Applied Physics, vol. 24, No. 8, P.L601;

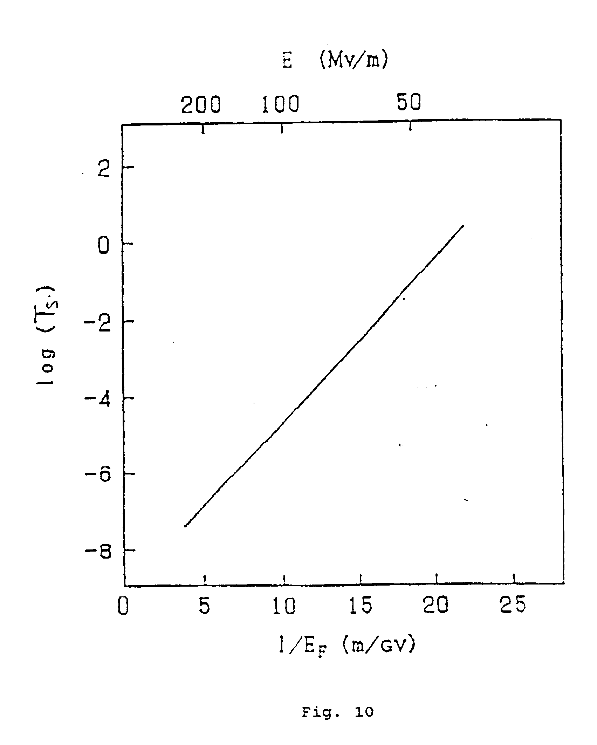

Figure 10 is a view showing the relation between inversion speed of the spontaneous polarisation and electric field;

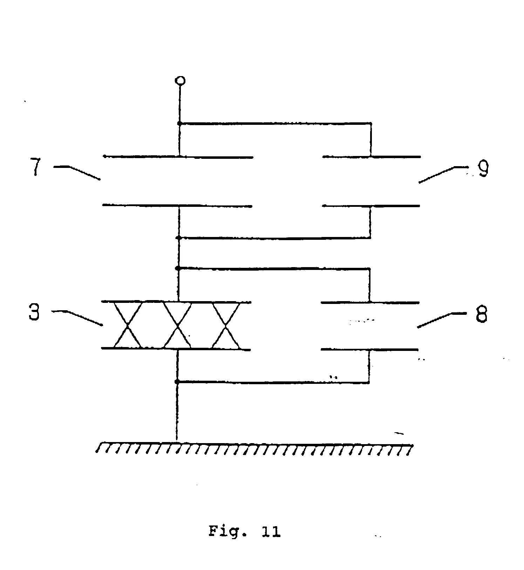

Figure 11 is an equivalent circuit diagram for one pixel with a parasitic capacitor and an additional capacitor added;

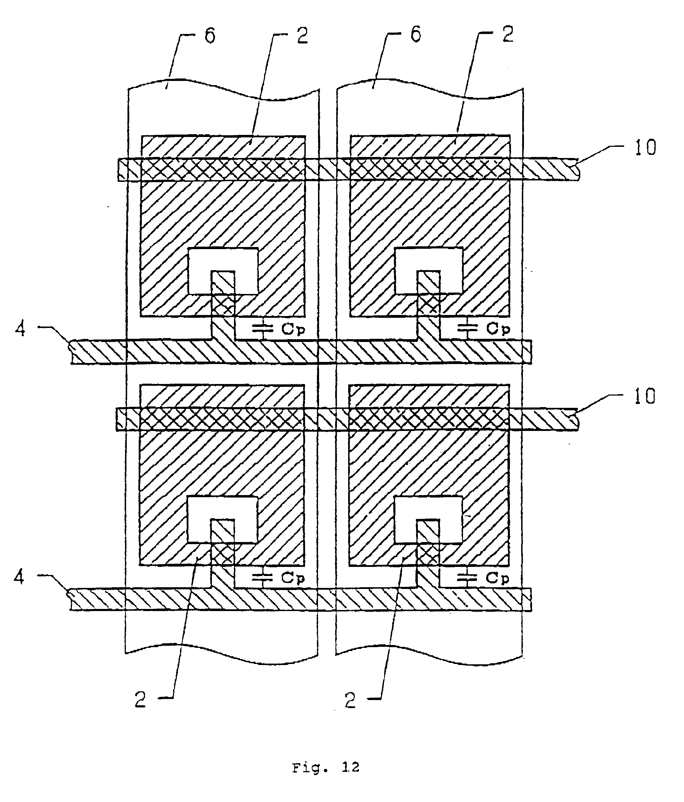

Figure 12 is a plan view of an active matrix display including the additional and parasitic capacitors; and

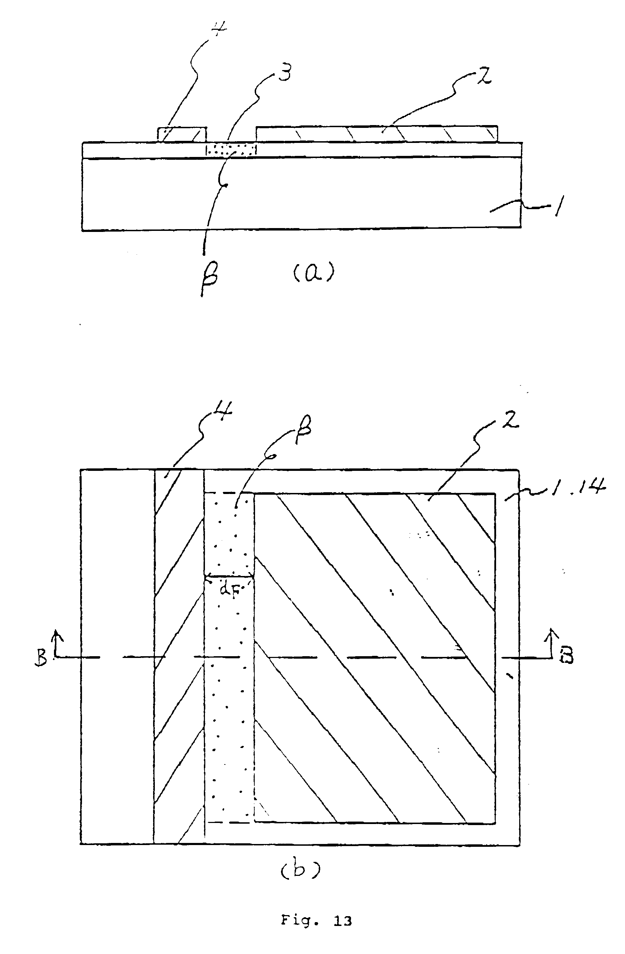

Figures 13 (a) and 13 (b) are cross sectional and plan views showing another active device which is capable of application with the present invention.

In Figures 1 (a) and 1 (b), an example of the structure of an active device for driving an active matrix display is shown. Figure 1 (b) is a plan view and Figure 1 (a) is a vertical cross sectional view along the line A - A in Figure 1 (b). The device is provided with a pixel electrode 2 formed of ITO arranged on an insulative substrate 1 formed of glass. A ferro-electric layer 3 formed of a copolymer of vinylidene fluoride (referred to as "VDF" hereinafter) and trifluoroethylene (referred to as "TrFE" hereinafter) is arranged on the pixel electrode 2, and a first electrode 4 formed of Al is arranged on the ferro-electric layer 3.

Referring to Figures 1 (a) and 1 (b), the thickness $d_F$ of the ferro-electric layer 3 provided between the pixel electrode 2 and the first electrode 4 is formed to be smaller than the distances x, y and z of the first electrode 4 in directions parallel to the pixel electrode 2 and the insulative substrate 1. Therefore, when a voltage is applied between the first electrode 4 and the pixel electrode 2, it is possible to set the voltage for inverting the spontaneous polarisation of the region β of the ferro-electric layer 3 sandwiched between the electrodes 4 and 2 without inverting in the directions of x, y and z, by inverting only the polarisation in the direction of the thickness $d_F$ which is smaller than the other distances between the electrodes 4 and 2. Since the thickness $d_F$ is in the relation: $d_F \ll x$, $d_F \ll y$ and $d_F \ll z$, the capacity of the active device, namely the capacity $C_F$ of the ferro-electric layer 3, is substantially determined in the region β shown in Figure 1. The region β is activated as the active layer.

It is possible to form each component, comprising the first electrode 4, the ferro-electric layer 3 and the pixel electrode 2, in order on the insulative substrate 1.

The active device of Figure 1 employed in a liquid crystal cell is shown in Figure 2. A substrate D comprising the pixel electrode 2 formed of ITO, the ferro-electric layer 3 formed of the copolymer of VDF and TrFE, and the first electrode 4 formed of Al on the insulative substrate 1, and a counter substrate E comprising a second electrode 6 formed of ITO on an insulative substrate 5 formed of glass are arranged to be opposed, and a liquid crystal material F is sandwiched therebetween.

It is also possible to use an alternative material having an electro-optical effect, such as an EL material, a gas, a material which varies the permeability of light in response to an electric field, for example an electro-chromic material, a material which varies its emitting and non-emitting conditions, or a material having varied colours, instead of the liquid crystal material F.

The material used for the pixel electrode 2, the first electrode 4 and the second electrode 6 is not limited only to ITO and Al. It is also possible to use an electro-conductive material, such as other metals, a transparent electrode formed of $SnO_2$, a semi-

conductor, a silicide, an electro-conductive high polymer, an electro-conductive coating and a super conductive material. Similarly, the material used for the insulative substrates 1 and 5 is not limited only to glass, it also being possible to use an inorganic material, such as ceramic, or an organic material, such as a plastics, an acrylic and a vinyl fluoride.

The material used for the ferro-electric layer 3 is not limited to the copolymer of VDF and TrFE. It is possible to use other ferro-electric materials, for example perovskite ferro-electric materials such as Ba-TiO$_3$, PbTiO$_3$ and WO$_3$, Rochelle salt, deuterium Rochelle salt, and Rochelle salt type ferro-electric materials such as a tartrate, potassium dihydrophosphate alkali type ferro-electric materials such as KDP, phosphate, arsenate, potassium dihydrogenphosphate, and potassium dideuteriumphosphate, guanidine type ferro-electric material such as GASH, and TGS, amorphous ferro-electric materials such as potassium niobate, glycine sulphate, ammonium sulphate, sodium sulphite, potassium ferrocyanide (yellow purssiate of potash), cadmium antimony iodide, or LiNbO$_3$, PZT, PLZT, LiTaO$_3$ and PbTiO$_3$, vinylidene polyfluoride, vinylidene fluoride and its copolymer, a copolymer of VDF and TeFE (tetrafluoroethylene), a copolymer of vinylidene cyanide and vinyl acetate, high polymer ferro-electric materials such as a copolymer of VDF and TrFE, and a single crystal or non-single crystal of Bi$_4$Ti$_3$O$_{12}$, Fe-B-O type, and electret. Further, it is possible to use a composite of two or more of the above mentioned ferro-electric materials or a composite with a paradielectric. The layer 3 is characterised in that a large remanence and high speed switching is provided with the inorganic ferro-electric materials, such as BaTiO$_3$, and a uniform ferro-electric layer over a large area can be easily obtained with the amorphous ferro-electric materials. An organic ferro-electric layer can be obtained by a spin coating method, and so it can be formed easily and uniformly in a large area at low cost. Further, since the ferro-electric material has a permittivity and a remanence which do not vary substantially, through actual using temperatures, its characteristics in relation to temperature are stable.

Furthermore, it is possible to use a ferro-electric material in which a powder (having a particle diameter in the range of 0.1 μm to 100 μm) of an inorganic ferro-electric material is held in an organic material.

Figure 3 is a partial plan view of an active matrix display using the active device shown in Figure 1. The active matrix display of Figure 3 can be obtained by employing the liquid crystal cell of Figure 2 in a matrix arrangement. As described above, the liquid crystal material is sandwiched between the substrate D provided with the pixel electrode 2 formed on the insulative substrate 1, the ferro-electric layer 3 and the first electrode 4, and the counter substrate E provided with the second electrode 6 formed on the insulative substrate 5. Each electrode in the display is formed in a matrix arrangement, the first electrode 4 being connected in a constant direction (in Figure 3, it is the vertical direction).

The property of the ferro-electric material, which is the basis of the active device used in the present example, will be explained with reference to Figures 4 (a), 4 (b), 4 (c) and 4 (d). Figure 4 (a) shows the hysteresis curve of the ferro-electric material. The remanence $P_r$ is the electric charge density remaining on the ferro-electric surface after the electric field applied to the ferro-electric material is cut off, and the electric charge density on the surface is known to be provided with memory characteristics. The arrangement of spontaneous polarisation under this condition is shown in Figure 4 (b). The plus surface electric charge held on the ferro-electric surface is shown by the arrow, the minus surface electric charge being held on the reverse surface. When the electric field, which is sufficiently large for inverting the spontaneous polarisation from the outside (namely, the electric field larger than the coercive field $E_C$) is applied, the spontaneous polarisation is inverted and, at this moment, the polarity of the electric charge held on the ferro-electric surface is reversed as shown in Figure 4 (c). When the coercive field is applied and the ferro-electric material is a non-single crystal, a condition in which each area of spontaneous polarisation is arranged at random vertically is held after the electric field is cut off (Figure 4 (d)). The electric charge on the surface of the ferro-electric material then becomes 0. The remanence $P_r$ can be controlled by the size of the ferro-electric material, the electric field and the time period of application of the electric field.

The basic operating principle for one pixel will now be explained with reference to the equivalent circuit shown in Figures 5 (a), 5 (b), 5 (c) and 5 (d) for one pixel of the active matrix display shown in Figure 3. One pixel corresponds to the liquid crystal cell shown in Figure 2, in which the ferro-electric layer 3 and the capacitor formed by the liquid crystal material 7 are serially connected.

In Figure 5 (a), there is shown a condition in which a positive voltage sufficient to invert the spontaneous polarisation in the ferro-electric layer 3 forming the active layer is applied to a terminal G, and the spontaneous polarisation is finally aligned down-wards in the selective period in a respective field period. By arranging the spontaneous polarisation in one direction, writing-in can be terminated. Then, the terminal G is held at ground potential as shown in Figure 5 (b). This condition is the holding condition, namely it corresponds to the non-selective period. In the holding condition, the ferro-electric layer 3 is provided with an amount of electric charge expressed by $-S_F \times P_r$ (wherein $S_F$ designates the area of ferro-electric layer 3 forming the active layer) and a distribution $+Q_{LC}$ of free electric charge between the liquid crystal material 7 and the ferro-electric layer 3. The liquid crystal material 7 is provided with an electric charge $Q_{LC} = C_{LC}V_{LC}$. Further, since the voltages $V_F$ and $V_{LC}$ applied to the ferro-electric layer 3 and the liquid crystal material 7 are equivalent, the relations shown below can be obtained:

$$Q_F = -S_F \cdot P_r + Q_{LC} = C_F V_F \quad (1)$$
$$Q_{LC} = -C_{LC}V_{LC} \quad (2)$$
$$V_F = V_{LC} \quad (3)$$

wherein $Q_{LC}$ designates the electric charge provided in the liquid crystal material 7, $C_{LC}$ designates the capacity of the liquid crystal material 7, $Q_F$ designates the electric charge provided in the ferro-electric layer 3, and $C_F$ designates the capacity of the active layer 3.

The following formulae can be obtained from the formulae (1), (2) and (3):

$$V_F = V_{LC} = \frac{-S_F P_r}{C_F + C_{LC}} \quad (4)$$

$$Q_{LC} = \frac{-C_{LC}S_F P_r}{C_F + C_{LC}} \quad (5)$$

$$Q_F = \frac{-C_F S_F P_r}{C_F + C_{LC}} \quad (6)$$

The voltage expressed by the formula (4) is held in the liquid crystal material 7 in the non-selective period, namely, the holding period.

The voltage $V_{LC}$ applied to the liquid crystal material 7 is proportional to the remanence $P_r$ as can be seen from the formula (4).

As described above, since the remanence $P_r$ is provided with memory characteristics, a leak electric current based on the use of the ferro-electric material is not caused, and the pixel shows the excellent holding characteristics of $V_{LC}$. An active device having a large write-in capacity and no leak current can thus be obtained for providing a clear image having a high contrast.

In the next field period, as shown in Figure 5 (c), a negative voltage is applied to the terminal G within the selective period, and the spontaneous polarisation is inverted to show a condition in which it is aligned upwards. Then, it is held as shown in Figure 5 (d) within the non-selective period, a voltage having a reverse polarity to that of the formulae (4), (5) and (6) being applied to the liquid crystal material 7 and the ferro-electric layer 3 for the holding.

As can be seen from the formula (4), by varying the size of the voltage $V_g$ applied to the terminal G to vary the amount of $P_r$, $V_{LC}$ can be controlled. Especially, when the ferro-electric material is structured with a non-single crystal, particularly with a multi-crystal ferro-electric material, $P_r$ can easily be controlled.

In the actual active display, the terminal G shown in Figure 5 does not become the ground level within the non-selective period, but has a data voltage $V_1$ applied thereto, and the liquid crystal material 7 has a disturbance electric potential

$$\frac{C_F}{C_{LC} + C_F} V_1$$

namely noise, applied thereto. For reducing the noise, it is desirable that $C_{LC}/C_F$ is large, preferably being at least more than 1 and if possible more than 10.

When the voltage $V_g$ is applied to the terminal G within the selective period,

$$\frac{C_{LC}}{C_{LC} + C_F} V_c$$

is applied to the ferro-electric layer 3. Since the spontaneous polarisation is reversed by this voltage, namely for a writing-in operation, it is desirable for the voltage to be large. Therefore, it is desirable for the value of $C_{LC}/C_F$ to be large, preferably more than 1 and if possible more than 10.

By applying the voltage $V_1$ to the terminal G within the non-selective period, the ferro-electric layer 3 is applied with the voltage

$$V_F = \frac{C_{LC}}{C_{LC} + C_F} V_1$$

Now, if the spontaneous polarisation in the ferro-electric layer 3 is inverted by $V_F$ within the non-selective period, a variation in the remanence $P_r$ is caused, and the voltage $V_{LC}$ applied to the liquid crystal material is varied in accordance with the formula (4). Namely, the voltage written in the liquid crystal material within the selective period is modulated in the non-selective period. As a result, cross talk is caused in the actual display operation, and noticeable degradation is caused in the display quality.

For avoiding the cross talk, the inversion of the spontaneous polarisation is advantageously avoided or prevented by the present invention. This inversion can be avoided by setting the electric field applied to the ferro-electric layer 3 to be less than the coercive electric field, by setting the voltage $V_F$ as expressed by the following formula:

$$\frac{C_{LC}}{C_{LC} + C_F} \mid V_1 \mid < E_C \cdot d_F \quad (7)$$

wherein $E_C$ designates the coercive electric field of the ferro-electric material forming the ferro-electric layer 3, $d_F$ designates the thickness of the ferro-electric layer 3, $C_F$ designates the capacity of the ferro-electric layer 3 in one pixel in the active device, and $C_{LC}$ designates the capacity of the liquid crystal material 7 for one pixel.

Under the condition in which the formula (7) is satisfied, cross talk is not caused.

In Figure 6, there is shown an equivalent circuit of the overall active matrix display shown in Figure 3. The second electrode 6 of the opposed substrate forms the selective line group A1, A2, A3 and A4, and the first electrode 4 of the substrate forms the data line group B1, B2 and B3. Each pixel is formed by a serial connection of the liquid crystal material with the ferro-electric layer 3. It is alternatively possible to use the second electrode 6 for the data line group and the first electrode 4 for the selective line group.

Figure 7 shows the signals for driving the active matrix display in the present example. The codes A1 to A4 and B1 to B3 in Figure 7 designate the electric potential of the selective lines A1 to A4 and the electric potential of the data lines B1 to B3 in Figure 6. $V_0$ designates the selective voltage and $V_1$ designates the data voltage. When $C_{LC} > C_F$, the voltage applied between each selective line and each data line is applied to almost all of the ferro-electric layer 3.

The case in which the selective line A1 is selected in a field period will be considered. The serial connection between the ferro-electric layer 3 and the liquid crystal material 7 of the pixel to have written in data corresponding to the ON and OFF states of the liquid crystal material 7 is applied respectively with the voltages

$$V (ON) = V_0 + V_1 \quad (8)$$
$$V (OFF) = V_0 - V_1 \quad (9)$$

And the serial connection of non-selected lines is applied with the voltage V (NON-SELECTED) = $V_1$, wherein V (ON) and V (OFF) are determined to have the relation

$$V (ON) > V (OFF) > d_F E_C \quad (10)$$

between $E_0$ and $E_C$ in Figure 4 (a). The spontaneous polarisation of the ferro-electric layer of a selected pixel and a non-selected pixel become as shown in Figures 4 (b) and 4 (c), the voltage corresponding to the remanence in each case being applied to the liquid crystal material whereby the liquid crystal material is brought into the ON and OFF states.

When the selective period for the line A1 is terminated, the next lines are selected sequentially in the order A2 and A3, and the data is written in each pixel. When the selective period is terminated, each line enters into the non-selective period.

When one field period is passed and the line A1 is required to be re-selected, a reverse voltage to the voltage expressed by the formulae (8), (9) and (10) is applied to the ferro-electric layer 3 of the pixels for selection of ON and OFF, and non-selected pixels have the following voltage applied to the ferro-electric layer 3

$$V (NON - SELECTED) = V_1 \quad (11)$$

with $V_1$ in the formula (11) satisfying the formula (7). The spontaneous polarisation of the ferro-electric layer of the selected and non-selected pixels becomes as shown in Figures 4 (b) and 4 (c), and the liquid crystal material has an electric field applied thereto corresponding to the remanence. Then, the liquid crystal material is brought into the ON and OFF states. Thereby, alternate driving in two field cycles is carried out.

Figure 8 shows the driving signals for another active matrix display of the present invention. The basic operation is similar to that of Figure 7. The difference is that the basic voltage, designated $\alpha 1$ or $\alpha 2$ in each case, is applied with an unsymmetrical data voltage employing two data voltage values $V_1$ and $V_2$. By using an unsymmetrical data voltage, the voltage applied to the liquid crystal material can be increased and the contrast of the active matrix display can be increased. In Figure 8, $V_1 > V_2$. Both $V_1$ and $V_2$ can be determined so that the inversion of the spontaneous polarisation in one field period (or one frame period) is avoided, or less than half of the total spontaneous polarisation is inverted, by means of the formula (7).

In Figure 8, $V_1 > V_2$ but it is possible for $V_2 > V_1$.

The switching cycle of the basic electric potential $\alpha 1$ and $\alpha 2$ in Figure 8 is similar to the case in Figure 7, in which $\alpha 1 - \alpha 2 = V_0 - V_1$. In Figure 8, the value of $\alpha 1 - \alpha 2$ is equal to $V_0 - V_2$, but it is not limited only thereto.

The vertical re-trace line period in Figure 8 is similar to the same period in Figure 7.

In Figures 7 and 8, the switching of the basic electric potential $\alpha 1$ and $\alpha 2$ can be formed as 1/n (n is an integral number greater than 2). For example, when n = 2, $V_1$ (or $V_2$) is determined so that the spontaneous polarisation is not inverted, or less than half of the total spontaneous polarisation is inverted, by means of the formula (7) within a half of one horizontal scanning period.

Next, a second example of the present invention will be explained. In this example, a higher voltage can be applied to the ferro-electric layer by considering the inverting speed of the remanence, in contrast to the first example described above. In the driving method of the present example, the electric field $E_F$ expressed by the following formula (12) is applied to the ferro-electric layer 3:

$$E_F = V_F / d_F = \frac{C_{LC}}{C_{LC} + C_F} \cdot \frac{|V_1|}{d_F} \quad (12)$$

wherein $d_F$ designates the thickness of the ferro-electric layer 3, $C_F$ designates the capacity of the ferro-electric layer for one pixel of the active device and $C_{LC}$ designates the capacity of the liquid crystal material 7 for one pixel.

The dependency of the speed of inversion of the spontaneous polarisation of the ferro-electric layer when comprising a copolymer of VDF and TrFE, is shown in Figure 9 and Figure 10.

In Figure 9, the time differential of electric displacement is plotted according to the inversion speed of spontaneous polarisation. Figure 9 is shown in the Japanese Journal of Applied Physics, vol. 24, No. 8, P.L661. Selected electric fields $E_F$ applied to the ferro-electric layer correspond to each curve. When the electric field becomes larger, the curve moves to the high speed side (i.e. the left side in Figure 9) to show the inversion speed $T_S$ of spontaneous polarisation becoming higher. It is to be noted that each curve displays the following: The left base (shorter time side) of each curve represents the starting time of the inversion of spontaneous polarisation, and the right base (longer time side) represents the time when the inversion is substantially terminated. Namely, the inversion of the spontaneous polarisation has not begun in the shorter time scale before the left base of the curve and half of the total spontaneous polarisation is inverted at the time corresponding to the top of each curve.

In Figure 10, the relation between $T_S$ and $E_F$ is shown, where $T_S$ designates the time corresponding to the top of each curve in Figure 9. Namely, $T_S$ is strongly dependent on $E_F$ (or $V_F$).

The electric field $E_F$ for which the spontaneous polarisation is not inverted can be determined as follows: For example, as shown in Figure 9, when the selective period is defined as a period of $24 \times 10^{-6}$ sec, the spontaneous polarisation is not inverted under the condition in which the electric field $E_F$ is less than 80 Mv/m. As another example, when the selective period is $5 \times 10^{-7}$ sec, the electric field $E_F$ is determined such that it is less than 140 Mv/m to avoid inversion of the spontaneous polarisation.

By determining the electric field $E_F$ to allow the time at which the spontaneous polarisation starts inverting to be greater than the selective period, the inversion of the spontaneous polarisation can be avoided to prevent cross talk. The electric field $E_F$ at this moment is related to the data voltage $V_1$ by the formula (12).

In the selective period, cross talk can be avoided to a limited extent even if the spontaneous polarisation is partially inverted. However, in such a case, it is desirable that the inversion amount is small, and preferably the inversion amount is less than half. For example, in this case, when the selected period is $24 \times 10^{-6}$ sec, the electric field $E_F$ can be determined to be less than 100 Mv/m. In this case, $24 \times 10^{-6}$ sec is the time giving the top of the curve 100 Mv/m, and it shows that half of the total spontaneous polarisation is inverted at the time corresponding to $T_S$. Namely, the electric field $E_F$ can be determined to allow $T_S$ in $E_F$ to be more than the selective period.

The reason why the time in which the spontaneous polarisation is not inverted is defined as the selective period is discussed below. Since the selective period is the minimum time unit in the operation of the display, then if the inversion of spontaneous polarisation can be completely avoided for avoiding cross talk, it can be avoided within the display operation period which is the minimum time unit. However, for a special pattern (for example, the ON or OFF condition is applied to a plurality of pixels in the driving method represented in Figure 7), $V_1$ is applied to the ferro-electric layer 3 of a pixel in a plurality of selective periods. Therefore, the spontaneous polarisation is possibly inverted. For preventing such a condition, it is preferable to determine $V_1$ to avoid the spontaneous polarisation being inverted in the combined time of a plurality of selective periods. For example, it can be arranged that the spontaneous polarisation is not inverted in a time period constituting two to ten times a selective period. Or it can be determined that the spontaneous polarisation is not inverted in one field period (or one frame period). In this latter case, cross talk is not caused except for a remarkably special display pattern, and the prevention of cross talk can be expected to be largely the same as in the case in which the time period is the selective period. The electric field $E_F$ is then determined in which the selected period is one field period (or one frame period).

Figure 11 shows one pixel with a parasitic capacitor 8, having a capacity $C_p$, in the ferro-electric layer 3 and an additional capacitor 9, having a capacity $C_a$ in the liquid crystal material. In this case, the following relation is obtained between $E_F$ and $V_1$:

$$E_F = \frac{V_F}{d_F} = \frac{C_{LC} + C_a}{C_{LC} + C_a + C_F + C_p} \times \frac{|V_1|}{d_F} \quad (13)$$

The electric field $E_F$ according to the formula (13) can be determined to allow the spontaneous polarisation not to be inverted within the selective period or the inverted spontaneous polarisation to be less than half of the total spontaneous polarisation in a manner similar to the case described with reference to the formula (12).

A specific example with the additional capacity $C_a$ and the parasitic capacity $C_p$ will be explained with reference to Figure 12. The pixel electrode 2 is provided on the insulative substrate 1, the ferro-electric layer 3 is provided on the pixel electrode 2, and an additional capacity electrode 10 formed of the first electrode 4 and Al is provided on the ferro-electric layer 3. The first electrode 4 and the additional capacity electrode 10 are formed by a similar process. The additional capacity $C_a$ is formed from the ferro-electric layer 3 held between the additional capacity electrode 10 and the pixel electrode 2. As shown in Figure 12, the parasitic capacity $C_p$ is naturally formed between the first electrode 4 and the pixel electrode 2. This is only one example, and it is possible to form the capacities $C_a$ and $C_p$ by other means.

Figures 13 (a) and 13 (b) show the structure of another example of active device for use in driving an active matrix display according to the present invention. Figure 13 (b) is a plan view, and Figure 13 (a) is a vertical cross sectional view along the line B - B in Figure 13 (b). In this case, the ferro-electric layer 3 is provided on the insulative substrate 1, and the pixel electrode 2 and the first electrode 4 are provided on the ferro-electric layer 3. In this active device, the active layer is structured by a part of the ferro-electric layer 3 designated β positioned between the first electrode 4 and the pixel electrode 2. In such a case, in which the first electrode 4 and the pixel electrode 2 are provided without a superposed portion on the surface of the insulative substrate, the thickness $d_F$

in the formula (7) or (12) corresponds to the distance between the first electrode 4 and the pixel electrode 2 as shown in Figure 13.

As described above, since in the present invention the remanence value is not varied and hence the spontaneous polarisation in the active layer is not inverted within the non-selective period, as a result of setting the absolute value of the data voltage $V_1$ to be smaller than $E_C \cdot d_F (C_{LC} + C_F)$, the active matrix display can be driven without causing cross talk and an excellent quality of display can be realised.

Further, by setting the value of the voltage $V_F$ applied to the active layer to allow the time from when it is applied until the time when half of the spontaneous polarisation in the active layer is inverted to be less than at least one selective period, the inversion of the spontaneous polarisation can be avoided even if a higher voltage is applied to the active layer. Therefore, an excellent display quality without cross talk can be provided.

## Claims

1. A method of driving an active matrix display having a first insulative substrate (1), a second insulative substrate (5), and a layer (7) of a material exhibiting an electro-optical effect between the first and second insulative substrates, the first insulative substrate carrying pixel electrodes (2) arranged in a matrix and a plurality of first parallel electrodes (4) separated from the pixel electrodes by regions (β) of an active layer (3) formed of ferro-electric material, and the second insulative substrate (5) carrying a plurality of second parallel electrodes (6) arranged in a direction perpendicular to the first parallel electrodes, the method comprising the steps of applying a selective voltage sequentially to each of said second electrodes (6) or said first electrodes (4) during respective selective periods, applying a data voltage to each of said first electrodes or said second electrodes during respective selective and non-selective periods, and characterised by controlling the data voltage, and thereby the voltage applied to each region of the active layer during the non-selective period, to have a value $V_1$, which satisfies the following expression:

$$| V_1 | < E_C \cdot d_F (C_{LC} + C_F)/ C_{LC}$$

where $E_C$ represents a coercive field of the ferro-electric material, $d_F$ represents the thickness of the region (β) of the active layer separating each first parallel electrode from the associated pixel electrode, and $C_{LC}$ and $C_F$ are the capacities of the active layer and the material provided with the electro-optical effect of one pixel, whereby inversion of more than half of a spontaneous polarisation of the region generated in the selective period is avoided.

2. A method of driving an active matrix display having pixel electrodes (2) arranged in a matrix on a first insulative substrate (1) and a plurality of first electrodes (4) arranged in a row direction through an active layer (3) formed of ferro-electric material, a plurality of second electrodes (6) arranged in a line direction on a second insulative substrate (5) opposed to said first insulative substrate, and a material layer (7) exhibiting an electro-optical effect provided between said first insulative substrate and said second insulative substrate, comprising the steps of applying serially a selective voltage $V_0$ to each of said first electrodes or said second electrodes for a selective period, and applying a data voltage $V_1$ to said second electrode or said first electrode, and characterised in that a voltage $V_F$ having an absolute value $| V_F |$ expressed by

$$| V_1 | \cdot C_{LC}/(C_{LC} + C_F)$$

is applied to said active layer, wherein a time period, from when said voltage $V_F$ is applied to said active layer until half of a spontaneous polarisation in said active layer is inverted, is greater than the selective time period, wherein a capacity of one pixel of said active layer is defined as $C_F$, and a capacity of one pixel of a material providing said electro-optical effect is defined as $C_{LC}$.

## Patentansprüche

1. Verfahren zum Ansteuern einer aktiven Matrixanzeige mit einem ersten isolierenden Substrat (1), einem zweiten isolierenden Substrat (5) und einer Schicht (7) aus einem einen elektrooptischen Effekt aufweisenden Material zwischen dem ersten und dem zweiten isolierenden Substrat, wobei das erste isolierende Substrat in einer Matrix angeordnete Pixelelektroden (2) und eine Mehrzahl von ersten parallelen Elektroden (4) trägt, welche von den Pixelelektroden durch Bereiche (β) einer aus ferroelektrischem Material gebildeten aktiven Schicht (3) getrennt sind, und das zweite isolierende Substrat (5) eine Mehrzahl von zweiten, in einer zur Richtung der ersten parallelen Elektroden orthogonalen Richtung angeordneten parallelen Elektroden (6) trägt, wobei das Verfahren die Schritte des sequentiellen Anlegens einer selektiven Spannung an jede der zweiten Elektroden (6) oder der ersten Elektroden (4) während entsprechender selektiver Perioden und des Anlegens einer Datenspannung an jede der ersten Elektroden oder der zweiten Elektroden während entsprechender selektiver und nicht-selektiver Perioden umfaßt, gekennzeichnet durch

Steuern der Datenspannung und dadurch der an jeden Bereich der aktiven Schicht während der nicht-selektiven Periode angelegten Spannung auf einen Wert $V_1$, welcher den folgenden Ausdruck erfüllt:

$$|V_1| < E_C \cdot d_F (C_{LC} + C_F)/C_{LC}$$

wobei $E_C$ eine Koerzitivfeldstärke des ferroelektrischen Materials ist, $d_F$ die Dicke des Bereichs ($\beta$) der jede erste parallele Elektrode von der zugeordneten Pixelelektrode trennenden aktiven Schicht ist und $C_{LC}$ und $C_F$ die Kapazitäten der aktiven Schicht und des den elektrooptischen Effekt aufweisenden Materials eines Pixels sind, wodurch eine Inversion von mehr als der Hälfte einer in der selektiven Periode erzeugten spontanen Polarisation des Bereichs vermieden wird.

2.   Verfahren zum Ansteuern einer aktiven Matrixanzeige mit in einer Matrix auf einem ersten isolierenden Substrat (1) angeordneten Pixelelektroden (2) und einer Mehrzahl von ersten, in einer Reihenrichtung durch eine aus ferroelektrischem Material gebildete aktive Schicht (3) angeordneten Elektroden (4), einer Mehrzahl von in einer Linienrichtung auf einem zweiten, zum ersten isolierenden Substrat entgegengesetzten isolierenden Substrat (5) angeordneten Elektroden (6) und mit einer einen elektrooptischen Effekt aufweisenden Materialschicht (7) zwischen dem ersten isolierenden Substrat und dem zweiten isolierenden Substrat, welches die Schritte des seriellen Anlegens einer selektiven Spannung $V_0$ an jede der ersten Elektroden oder der zweiten Elektroden während einer selektiven Periode und des Anlegens einer Datenspannung $V_1$ an die zweite Elektrode oder die erste Elektrode umfaßt, dadurch gekennzeichnet,
daß eine Spannung $V_F$ mit einem Absolutwert $|V_F|$,
ausgedrückt durch:

$$|V_1| \cdot C_{LC}/ (C_{LC} + C_F),$$

auf die aktive Schicht angelegt wird, wobei eine Zeitperiode, von dem Zeitpunkt, in welchem die Spannung $V_F$ auf die aktive Schicht angelegt wird, bis zu dem Zeitpunkt, in welchem die Hälfte einer spontanen Polarisation in der aktiven Schicht invertiert ist, größer ist als die selektive Zeitperiode, wobei eine Kapazität eines Pixels der aktiven Schicht als $C_F$ definiert ist und eine Kapazität eines Pixels eines den elektrooptischen Effekt aufweisenden Materials als $C_{LC}$ definiert ist.

**Revendications**

1.   Procédé de commande d'un afficheur à matrice active pourvue d'un premier substrat isolant (1), d'un second substrat isolant (5), et d'une couche (7) d'un matériau présentant un effet électro-optique entre le premier et le second substrats isolants, le premier substrat isolant portant des électrodes à pixels (2) disposées en une matrice et une pluralité de premières électrodes parallèles (4) séparées des électrodes à pixels par des régions ($\beta$) d'une couche active (3) formée dans un matériau ferro-électrique, et le second substrat isolant (5) portant une pluralité de secondes électrodes parallèles (6) disposées dans une direction perpendiculaire aux premières électrodes parallèles, le procédé comprenant les étapes consistant à appliquer une tension sélective de façon séquentielle à chacune desdites secondes électrodes (6) ou desdites premières électrodes (4) pendant des périodes sélectives respectives, à appliquer une tension de données à chacune desdites premières électrodes ou desdites secondes électrodes pendant des périodes sélectives et non sélectives respectives, et caractérisé par le contrôle de la tension de données, et ainsi de la tension appliquée à chaque région de la couche active pendant la période non sélective, pour que celle-ci prenne une valeur $V_1$, qui satisfait à l'expression suivante :

$$|V_1| < E_C \cdot d_F (C_{LC} + C_F)/C_{LC}$$

dans laquelle $E_C$ représente un champ coercitif du matériau ferro-électrique, $d_F$ représente l'épaisseur de la région ($\beta$) de la couche active qui sépare chaque première électrode parallèle de l'électrode de pixel associée, et $C_{LC}$ et $C_F$ sont les capacités de la couche active et du matériau présentant l'effet électro-optique d'un pixel, ce qui permet d'éviter l'inversion de plus de la moitié d'une polarisation spontanée de la région générée dans la période sélective.

2.   Procédé de commande d'un afficheur à matrice active pourvu d'électrodes à pixels (2) disposées en une matrice sur un premier substrat isolant (1) et d'une pluralité de premières électrodes (4) disposées dans une direction de rangées à travers une couche active (3) formée dans un matériau ferro-électrique, d'une pluralité de secondes électrodes (6) disposées dans une direction de lignes sur un second substrat isolant (5) qui fait face audit premier substrat isolant, et d'une couche de matériau (7) présentant un effet électro-optique disposée entre ledit premier substrat isolant et ledit second substrat isolant, comprenant les étapes consistant à appliquer en série une tension sélective $V_0$ à chacune desdites premières électrodes ou desdites secondes électrodes pendant une période sélective et à appliquer une tension de données $V_1$ à ladite seconde électrode ou à ladite première électrode, et caractérisé en ce qu'une tension $V_F$ ayant une valeur absolue $|V_F|$ exprimée par

$$|V_1| \cdot C_{LC}/(C_{LC} + C_F)$$

est appliquée à ladite couche active, dans lequel une période de temps, comprise entre l'instant où ladite tension $V_F$ est appliquée à ladite couche active et l'instant où la moitié d'une polarisation spontanée dans ladite couche active est inversée, est supérieure à la période de temps sélective, dans lequel une capacité d'un pixel de ladite couche active est définie par $C_F$, et une capacité d'un pixel d'un matériau présentant ledit effet électro-optique est définie par $C_{LC}$.

(a)

(b)

Fig. 1

Fig. 2

Fig. 3

(a)

(b)

(c)

(d)

Fig. 4

Fig. 5

Fig. 6

Fig. 7

Fig. 8

Fig. 9

Fig. 10

Fig. 11

Fig. 12

(a)

(b)

Fig. 13